# FASCICULE DE BREVET EUROPEEN

(11) **EP 3 945 674 B1**
(45) Date de publication et mention de la délivrance du brevet: **11.11.2026**
(21) Numéro de dépôt: 21187095.1
(22) Date de dépôt: 22.07.2021
(51) Int. Cl.: H02M 3/158, H02M 3/156

(54) **CONVERTISSEUR DE TENSION**
SPANNUNGSWANDLER
VOLTAGE CONVERTER

(30) Priorité: 30.07.2020 FR 2008090
(43) Date de publication de la demande: 02.02.2022
(73) Titulaire: STMicroelectronics (Rousset) SAS, 13790 Rousset (FR)
(72) Inventeur: ORTET, Sebastien, 13790 CHATEAUNEUF-LE-ROUGE (FR); LAUZIER, Olivier, 13720 LA BOUILLADISSE (FR)
(74) Mandataire: Cabinet Beaumont

(56) Documents cités:
- US-A1- 2010 141 225
- US-A1- 2012 038 331
- US-A1- 2019 267 897
- US-B1- 8 080 987

## Description

### Domaine technique

La présente description concerne de façon générale les circuits électroniques. Elle concerne plus particulièrement les convertisseurs de tension DC/DC, de type alimentation à découpage, qui convertissent une tension continue (DC) d'alimentation en une tension continue (DC) de sortie, notamment les convertisseurs de tension DC/DC de type abaisseur dans lesquels la tension continue de sortie a une valeur plus faible que celle de la tension continue d'alimentation.

### Technique antérieure

Dans un convertisseur à découpage, une tension d'alimentation du convertisseur est découpée (ou hachée) en commutant des interrupteurs de manière à mettre en oeuvre des phases d'accumulation d'énergie dans un ensemble comprenant un élément inductif, et un élément capacitif et des phases de restitution, à une charge connectée en sortie du convertisseur, de l'énergie accumulée dans cet ensemble.

Dans un convertisseur à découpage de type PFM, c'est-à-dire à modulation de fréquence d'impulsion ("Pulse Frequency Modulation"), chaque cycle de fonctionnement du convertisseur comprend une phase d'accumulation d'énergie dans l'ensemble suivie d'une phase de restitution d'énergie à la charge connectée au convertisseur. Pendant la phase d'accumulation d'énergie, le courant traversant l'élément inductif augmente. Pendant la phase de restitution d'énergie, le courant traversant l'élément inductif diminue. Pour chaque cycle de fonctionnement, il est souhaitable que le courant traversant l'élément inductif soit nul au début de la phase d'accumulation d'énergie et à la fin de la phase de restitution d'énergie.

Les convertisseurs à découpage connus, notamment de type PFM, présentent divers inconvénients.

Le document US 2012/0038331 décrit des systèmes et des procédés de fonctionnement lissé sous charges faibles dans un convertisseur continu-continu.

Le document US 2010/141225 décrit un procédé et un appareil pour des transitions efficaces entre différents modes de fonctionnement d'un régulateur.

Le document US 8,080,987 décrit un modulateur à positionnement d'impulsions actif.

### Résumé de l'invention

Il existe un besoin de pallier tout ou partie des inconvénients des convertisseurs à découpage connus, en particulier de type PFM.

Un mode de réalisation pallie tout ou partie des inconvénients des convertisseurs à découpage connus, en particulier de type PFM.

L'invention est définie par les revendications annexées.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente de manière très schématique un exemple de réalisation d'un convertisseur de tension DC/DC ;
la figure 2 représente des chronogrammes illustrant un exemple de fonctionnement du convertisseur de la figure 1 ;
la figure 3 représente d'autres chronogrammes illustrant le fonctionnement souhaité ou théorique, et le fonctionnement réel ou pratique du convertisseur de la figure 1 ;
la figure 4 représente un mode de réalisation d'un convertisseur de tension ; et
la figure 5 représentent des chronogrammes illustrant le fonctionnement du mode de réalisation de la figure 4.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

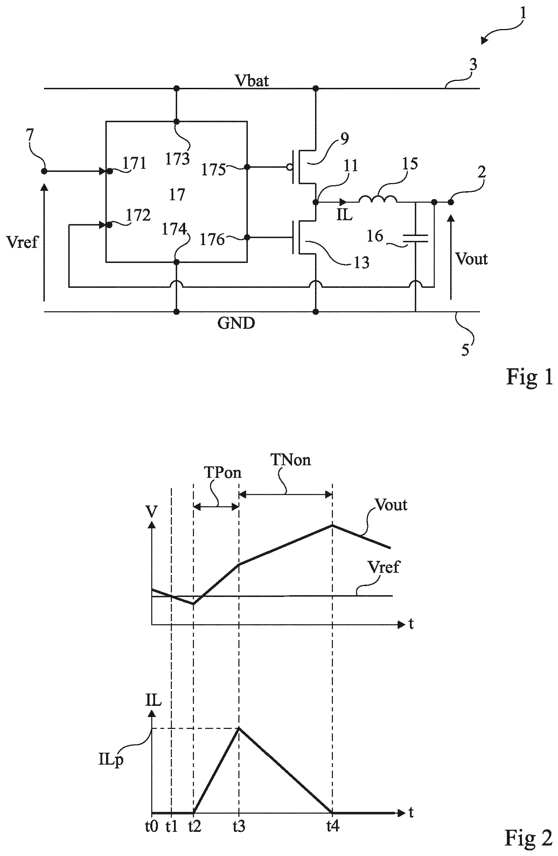

La figure 1 représente, de manière très schématique, un exemple d'un convertisseur 1 de tension du type auquel s'appliquent les modes de réalisation décrits. Dans cet exemple, le convertisseur 1 est un convertisseur DC/DC, de type alimentation à découpage, qui convertit une tension continue (DC) d'alimentation en une tension continue (DC) de sortie.

Le convertisseur 1 est configuré pour fournir une tension continue de sortie Vout. Le convertisseur comprend un noeud de sortie 2, sur lequel est disponible la tension Vout.

Le convertisseur 1 est alimenté par une tension continue d'alimentation Vbat. Le convertisseur 1 est alors connecté entre un premier rail conducteur, ou noeud, 3 mis à la tension Vbat, et un deuxième rail conducteur, ou noeud, 5 mis à un potentiel de référence GND.

Le convertisseur 1 est configuré pour fournir la tension Vout à une valeur égale à une valeur de consigne. Pour cela, le convertisseur 1 reçoit, sur un noeud d'entrée 7, une tension continue de consigne Vref référencée par rapport au potentiel GND, dont la valeur est représentative de la valeur de consigne de la tension Vout, de préférence égale à la valeur de consigne de la tension Vout.

Dans cet exemple, les tensions Vout, Vbat et Vref sont positives. Dans cet exemple, les tensions Vout, Vbat et Vref sont référencées au potentiel GND, par exemple la masse.

Dans cet exemple, le convertisseur 1 est de type abaisseur ou buck, c'est-à-dire que la valeur de consigne de la tension Vout est inférieure à la valeur de la tension Vbat. Dit autrement, la valeur de la tension Vout est inférieure à celle de la tension Vbat.

Le convertisseur 1 comprend un premier transistor MOS ("metal oxyde semiconductor" - métal oxyde semiconducteur) 9, de préférence un transistor PMOS (transistor MOS à canal P). Le transistor MOS 9 est relié, de préférence connecté, entre le rail 3 et un noeud interne 11. Dit autrement, une première borne de conduction du transistor 9, par exemple sa source, est reliée, de préférence connectée, au rail 3, une deuxième borne de conduction du transistor 9, par exemple son drain, étant reliée, de préférence connectée, au noeud 11.

Le convertisseur 1 comprend en outre un deuxième transistor MOS 13, de préférence un transistor NMOS (transistor MOS à canal N). Le transistor 13 est relié, de préférence connecté, entre le noeud 11 et le rail 5. Dit autrement, une première borne de conduction du transistor 13, par exemple sa source, est reliée, de préférence connectée, au rail 5, une deuxième borne de conduction du transistor 13, par exemple son drain, étant reliée, de préférence connectée, au noeud 11. A titre de variante, le transistor NMOS peut être remplacé par une diode ou une diode Schottky.

Ainsi, les transistors 9 et 13 sont connectés en série entre les rails 3 et 5, et sont connectés l'un à l'autre au niveau du noeud interne 11.

Le convertisseur 1 comprend un élément inductif ou inductance 15. L'inductance 15 est connectée entre le noeud 11 et le noeud 2. Le convertisseur 1 comprend un élément capacitif ou condensateur de sortie 16 connectée entre le noeud 2 et le rail 5. A titre d'exemple, la capacité de l'élément capacitif est supérieure à 2 µF, de préférence entre 2,2 µF à 20 µF, voire plus. Ce condensateur de sortie joue le rôle de filtre. Dit autrement, ce condensateur de sortie du convertisseur permet de lisser le courant présent sur le noeud 2 et de stocker de l'énergie fournie au noeud 2 par le convertisseur.

Le convertisseur 1 comprend un circuit de commande 17. Le circuit 17 est configuré pour mettre en oeuvre, ou commander, les cycles de fonctionnement du convertisseur 1, de manière à réguler la tension Vout pour que sa valeur soit égale à la valeur de consigne Vref.

Pour cela, le circuit 17 comprend :
- une borne 171 reliée, de préférence connectée, au noeud 7 ;
- une borne 172 reliée, de préférence connectée, au noeud 2 ;
- une borne 173 reliée, de préférence connectée, au rail 3 ;
- une borne 174 reliée, de préférence connectée, au rail 5 ;
- une borne 175 reliée, de préférence connectée, à une borne de commande, ou grille, du transistor 9 ; et
- une borne 176 reliée, de préférence connectée, à une borne de commande, ou grille, du transistor 13.

En fonctionnement, une charge est connectée entre le noeud 2 et le rail 5 de manière à être alimentée par la tension Vout. Cette charge comprend par exemple une capacité d'entrée entre le noeud 2 et le rail 5.

Dans cet exemple, le convertisseur 1 est configuré pour fonctionner en modulation de fréquence d'impulsion (mode de conduction discontinue). Le circuit 17 est alors configuré pour démarrer un cycle de fonctionnement du convertisseur 1 quand la valeur de la tension Vout est inférieure à la valeur de consigne Vref et que les deux transistors 9 et 13 sont à l'état bloqué. Plus particulièrement, au début de chaque cycle de fonctionnement, le circuit 17 est configuré pour commander la mise à l'état passant du transistor 9, le transistor 13 étant laissé à l'état bloqué. De l'énergie est alors accumulée dans l'inductance 15 et dans la capacité 16, pendant une première durée TPon par exemple constante pour chaque cycle de fonctionnement où le transistor 9 est maintenu à l'état passant par le circuit 17, un courant IL circulant alors dans l'inductance 15. A la fin de la durée TPon, le circuit 17 est configuré pour commander la mise à l'état bloqué du transistor 9 et la mise à l'état passant du transistor 13. De l'énergie est alors restituée par l'inductance 15 et la capacité 16, à la charge connectée en sortie du convertisseur, pendant une deuxième durée TNon par exemple constante pour chaque cycle de fonctionnement où le transistor 13 est maintenu à l'état passant par le circuit 17, le courant IL dans l'inductance diminuant. A la fin de la durée TNon, le circuit 17 est configuré pour commander la mise à l'état bloqué du transistor 13.

De manière idéale, on souhaite que la durée TNon soit déterminée de sorte que l'instant où le circuit 17 commande la mise à l'état bloqué du transistor 13, c'est-à-dire par exemple la fin d'un cycle de fonctionnement, corresponde à l'instant où le courant IL circulant à travers l'inductance 15 s'annule. Toutefois, en pratique, comme cela sera décrit plus en détail dans la suite de la description, cela n'est pas toujours le cas, ce qui pose problème.

La figure 2 représente des chronogrammes illustrant un exemple de fonctionnement souhaité du convertisseur 1 de la figure 1.

Le chronogramme en haut de la figure 2 illustre l'évolution, en fonction du temps t, de la tension Vout, en volts V, le chronogramme en bas de la figure 2 illustrant l'évolution correspondante, en fonction du temps t, du courant IL traversant l'inductance 15.

A un instant t0, les transistors 9 et 13 sont à l'état bloqué, le courant IL est nul, et la valeur de la tension Vout est supérieure à sa valeur de consigne, dans cet exemple la valeur de la tension Vref.

Entre l'instant t0 et un instant postérieur t2, la tension Vout diminue, par exemple du fait que la charge connectée au convertisseur 1 consomme du courant et décharge le condensateur de sortie.

A un instant t1 entre les instants t0 et t2, la tension Vout devient inférieure à sa valeur de consigne Vref. Cela est détecté par le circuit 17 du convertisseur 1 qui commande alors la mise à l'état passant du transistor 9. Le transistor 9 devient passant à l'instant t2.

Ainsi, à partir de l'instant t2, l'inductance 15 a une borne connectée au noeud 2 et une borne couplée au rail 3, via le transistor 9. Le courant IL circulant à travers l'inductance 15 augmente.

Il en résulte que, à partir de l'instant t2, du courant IL est fourni au noeud 2, et la capacité 16 entre le noeud 2 et le rail 5 se charge. La tension Vout augmente et redevient supérieure à sa valeur de consigne Vref.

A un instant suivant t3, égal à t2 + TPon, le circuit 17 commande la mise à l'état passant du transistor 13 et la mise à l'état bloqué du transistor 9. A l'instant t3, le courant dans l'inductance a une valeur maximale ILp.

Ainsi, à partir de l'instant t3, l'inductance 15 a une borne connectée au noeud 2 et une borne couplée au rail 5, via le transistor 13. Le courant IL circulant à travers l'inductance 15 diminue.

Bien que le courant IL diminue à partir de l'instant t3, la capacité entre le noeud 2 et le rail 5 continue de se charger et la tension Vout continue d'augmenter si le courant tiré par la charge est inférieur au courant IL fournit au noeud 2.

A un instant t4 suivant, égal à t3 + TNon, le circuit 17 commande la mise à l'état bloqué du transistor 13. On considère ici que le convertisseur 1 fonctionne comme il le devrait, et le courant IL est alors nul à l'instant t4. Toutefois, en pratique, ce n'est pas toujours le cas.

A partir de l'instant t4, le courant IL est nul et la tension Vout diminue, de manière similaire à ce qui se passait à l'instant t0.

Bien que cela ne soit pas représenté ici, quand la valeur de la tension Vout repasse en dessous de sa valeur de consigne Vref à un instant postérieur à l'instant t4, le circuit 17 met en oeuvre un nouveau cycle de fonctionnement tel que décrit en relation avec les instants successifs t2, t3 et t4.

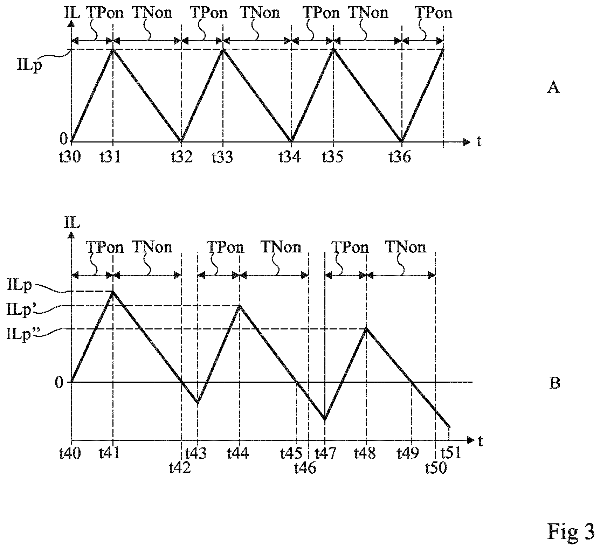

La figure 3 représente d'autres chronogrammes illustrant le fonctionnement du convertisseur 1 de la figure 1. Plus particulièrement, un chronogramme A (en haut en figure 3) représente un exemple idéal ou théorique de l'évolution du courant IL, et un chronogramme B (en bas en figure 3) représente un exemple de l'évolution réelle du courant IL. Ces deux chronogrammes A et B illustrent un exemple de fonctionnement où, pour plusieurs cycles de fonctionnement successifs, la tension Vout est inférieure à la tension Vref à la fin de chaque cycle de fonctionnement du convertisseur 1.

A un instant t30 (figure 3A), bien que cela ne soit pas illustré en figure 3, la tension Vout est inférieure à la tension Vref. Un cycle de fonctionnement débute avec la commutation à l'état passant du transistor 9. Il en résulte que le courant IL croît jusqu'à un instant suivant t31 égal à t30 + TPon.

A l'instant t31, le courant IL atteint sa valeur maximale ILp. En outre, les transistors 9 et 13 sont commutés respectivement à l'état bloqué et à l'état passant. Il en résulte que le courant décroît jusqu'à un instant suivant t32 égal à t31 + TNon.

Dans cet exemple de fonctionnement idéal, le transistor 13 est commuté à l'état bloqué à l'instant t32, et le courant IL s'annule à cet instant t32.

A l'instant t32, la tension Vout étant inférieure à la tension Vref, le transistor 9 est commuté à l'état passant, ce qui marque le début d'un nouveau cycle de fonctionnement. Le courant IL croît alors jusqu'à un instant suivant t33 égal à t32 + TPon.

A l'instant t33, le courant IL atteint la valeur ILp. En outre, les transistors 9 et 13 sont commutés respectivement à l'état bloqué et à l'état passant. Il en résulte que le courant décroît jusqu'à un instant suivant t34 égal à t33 + TNon.

Dans cet exemple de fonctionnement idéal, le transistor 13 est commuté à l'état bloqué à l'instant t34, et le courant IL s'annule à l'instant t34.

A l'instant t34, la tension Vout étant inférieure à la tension Vref, le transistor 13 est commuté à l'état passant, ce qui marque le début d'un nouveau cycle de fonctionnement. Le courant IL croît jusqu'à un instant suivant t35 égal à t34 + TPon.

A l'instant t35, le courant IL atteint la valeur ILp. En outre, les transistors 9 et 13 sont commutés respectivement à l'état bloqué et à l'état passant. Il en résulte que le courant décroît jusqu'à un instant suivant t36 égal à t35 + TNon.

Dans cet exemple de fonctionnement idéal, le transistor 13 est commuté à l'état bloqué à l'instant t36, et le courant IL s'annule à l'instant t36.

A l'instant t36, la tension Vout étant inférieure à la tension Vref, un nouveau cycle de fonctionnement débute.

Dans l'exemple de fonctionnement théorique illustré par le chronogramme A, à la fin de chaque cycle de fonctionnement, la commutation du transistor 13 à l'état bloqué intervient au moment où le courant IL s'annule. Ainsi, lorsqu'un cycle de fonctionnement est immédiatement suivi par un nouveau cycle de fonctionnement, dans ce nouveau cycle de fonctionnement, le courant IL croît à partir d'une valeur nulle.

Le chronogramme B illustre un exemple correspondant de fonctionnement réel du convertisseur 1. Dans cet exemple de fonctionnement réel, on considère le cas pratique où le transistor 13 n'est pas immédiatement commuté à l'état bloqué à la fin de la durée TNon qui s'est écoulée depuis sa dernière commutation à l'état passant.

A un instant t40 (figure 3B), la tension Vout étant inférieure à la tension Vref, un cycle de fonctionnement débute avec la commutation à l'état passant du transistor 9. Il en résulte que le courant IL croît jusqu'à un instant suivant t41 égal à t40 + TPon.

A l'instant t41, le courant IL atteint sa valeur maximale ILp. En outre, les transistors 9 et 13 sont commutés respectivement à l'état bloqué et à l'état passant. Il en résulte que le courant décroît jusqu'à un instant suivant t42 égal à t41 + TNon. Le courant s'annule à l'instant t42. Toutefois, la commutation du transistor 13 à l'état bloqué n'est effective qu'à un instant t43 postérieur à l'instant t42. Ainsi, entre les instants t42 et t43, le courant IL est négatif et décroît. Dit autrement, le courant circule dans l'inductance 15 du noeud 11 vers le noeud 2 avant l'instant t42, s'annule à l'instant t42, et circule dans l'inductance 15, du noeud 2 vers le noeud 11 après l'instant t42.

A l'instant t43, la tension Vout étant inférieure à la tension Vref, le transistor 9 est commuté à l'état passant à l'instant t43, ce qui marque le début d'un nouveau cycle de fonctionnement. Le courant IL croît alors jusqu'à un instant suivant t44 égal à t43 + TPon.

A l'instant t44, le courant IL atteint une valeur ILp', inférieure à la valeur maximale ILp du fait que la durée TPon est constante à chaque cycle. En outre, les transistors 9 et 13 sont commutés respectivement à l'état bloqué et à l'état passant. Il en résulte que le courant IL décroît jusqu'à un instant suivant t46 égal à t44 + TNon, le courant IL s'annulant à un instant t45 compris entre les instants t44 et t46. En outre, la commutation du transistor 13 à l'état bloqué n'est effective qu'à un instant t47 postérieur à l'instant t46. Ainsi, entre les instants t45 et t47, le courant IL est négatif et décroît jusqu'à une valeur plus faible (ou plus grande en valeur absolue) que celle atteinte à l'instant t43.

A l'instant t47, la tension Vout étant inférieure la tension Vref, le transistor 9 est commuté à l'état passant à l'instant t47, ce qui marque le début d'un nouveau cycle de fonctionnement. Le courant IL croît alors jusqu'à un instant suivant t48 égal à t47 + TPon.

A l'instant t48, le courant IL atteint une valeur ILp'', inférieure à la valeur ILp'. En outre, les transistors 9 et 13 sont commutés respectivement à l'état bloqué et à l'état passant. Il en résulte que le courant IL décroît jusqu'à un instant suivant t50 égal à t48 + TNon, le courant IL s'annulant à un instant t49 compris entre les instants t48 et t50. En outre, la commutation du transistor 13 à l'état bloqué n'est effective qu'à un instant t51 postérieur à l'instant t50. Ainsi, entre les instants t49 et t51, le courant IL est négatif et décroît jusqu'à une valeur plus faible (ou plus grande en valeur absolue) que celle atteinte à l'instant t47.

Du fait qu'à chaque cycle de fonctionnement illustré par le chronogramme B, la valeur maximale atteinte par le courant IL (instants t41, t44 et t48) est de plus en plus faible, le convertisseur 1 ne fournit pas assez d'énergie au noeud 2 pour réguler la tension Vout à sa valeur Vref, la tension Vout étant par exemple de plus en plus faible, ce qui pose problème. En outre, à chaque cycle de fonctionnement illustré par le chronogramme B, la valeur négative atteinte par le courant IL (instants t43, t47 et t51) est de plus en plus faible (ou de plus en plus élevée en valeur absolue), d'où il résulte que le convertisseur 1 prélève de plus en plus d'énergie sur le noeud 2 ce qui n'est pas souhaitable. En effet, la valeur du courant fourni à la charge, et en particulier la valeur du pic de courant, décroit d'un cycle à l'autre, ce qui a un impact négatif sur l'alimentation de la charge. De plus, en théorie, la valeur maximale du courant IL pourrait décroître à l'infini, mais, en pratique, le transistor 13 peut, dans certains cas, être détruit, ou endommagé, avant cela par des valeurs négatives du courant IL que le transistor 13 n'est pas en mesure de faire circuler entre ses bornes de conduction.

On a décrit en relation avec le chronogramme B de la figure 3 un exemple pratique de fonctionnement dans lequel la commutation à l'état bloqué du transistor 13 intervient après l'annulation du courant IL.

Dans un autre exemple pratique de fonctionnement non illustré, à chaque cycle de fonctionnement d'une pluralité de cycles successifs mis en oeuvre immédiatement les uns à la suite des autres, le transistor 13 est commuté à l'état bloqué alors que le courant IL n'est pas nul et est encore positif. Dans ce cas, à chacun des cycles de fonctionnement, le courant IL croît à partir d'une valeur de plus en plus élevée, d'où il résulte que le courant IL atteint une valeur maximale de plus en plus élevée, et que le cycle de fonctionnement se termine avec une valeur non nulle et positive du courant IL de plus en plus élevée. Ce fonctionnement est moins gênant que celui décrit en relation avec le chronogramme B car, après plusieurs cycles de fonctionnement, la tension Vout aura retrouvé sa valeur de consigne Vref. Ainsi, le cycle de fonctionnement suivant ne sera pas immédiatement mis en oeuvre ce qui laissera le temps au courant IL de s'annuler.

Les deux cas, c'est-à-dire le cas décrit en relation avec le chronogramme B de la figure 3 et l'autre cas pratique décrit ci-dessus, sont généralement au moins en partie causés par des imperfections dans des comparateurs du circuit 17.

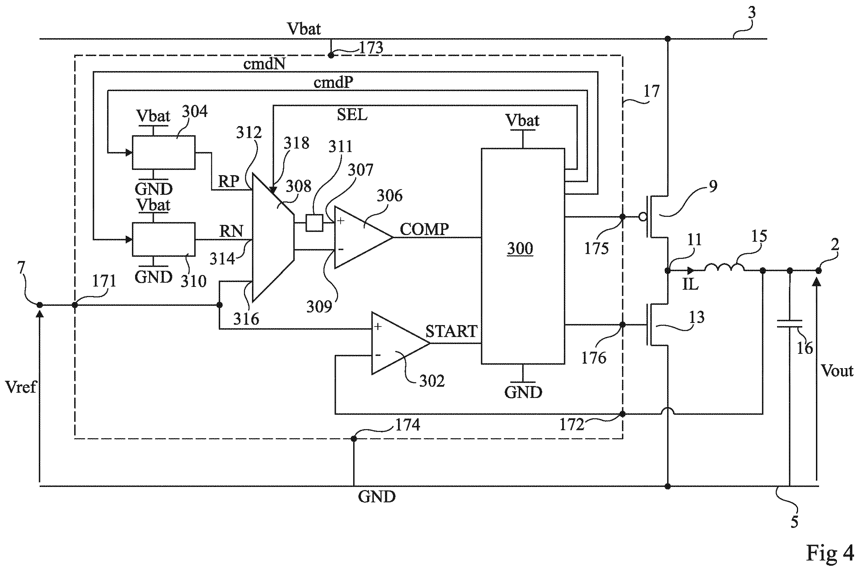

La figure 4 représente un mode de réalisation d'un convertisseur de tension. Le convertisseur de la figure 4 comprend les éléments décrits en relation avec la figure 1, le circuit 17 étant plus détaillé.

Le circuit 17 comprend un circuit 300, par exemple une machine d'état. La machine d'état 300 est configurée pour fournir les signaux de commande des transistors 9 et 13 aux bornes respectives 175 et 176. Pour déterminer les signaux de commande des transistors 9 et 13, la machine d'état 300 reçoit plusieurs signaux. Le circuit 300 est alimenté par la tension Vbat, et est connecté entre les rails 3 et 5.

Le circuit 17 comprend un comparateur 302 configuré pour fournir, sur sa sortie, un signal START représentatif de la comparaison de la valeur de la tension Vout à sa valeur de consigne. La sortie du comparateur 302 est reliée, par exemple connectée, au circuit 300. Le signal START est dans un premier état, par exemple un état haut, lorsque la valeur de la tension Vout est inférieure à sa valeur de consigne, et dans un deuxième état, par exemple un état bas, lorsque la valeur de la tension Vout est supérieure à sa valeur de consigne. Le comparateur 302 comprend une première entrée, par exemple inverseuse (-), configurée pour recevoir une tension dont la valeur est représentative de la valeur de la tension Vout, et une deuxième entrée, par exemple non inverseuse (+), configurée pour recevoir une tension dont la valeur est représentative de la valeur de consigne de la tension Vout.

Dans cet exemple où la valeur de la tension Vref est égale à la valeur de consigne de la tension Vout, le comparateur 302 est configuré pour comparer la tension Vref à la tension Vout, la première entrée du comparateur 302 étant connectée au noeud 2, et la deuxième entrée du comparateur 302 étant connectée à la borne 171 du circuit 17.

Le circuit 17 comprend un comparateur 306 configuré pour fournir, sur sa sortie, un signal COMP représentatif de la comparaison entre la tension de consigne et une rampe de tension. La sortie du comparateur 306 est reliée, de préférence connectée, au circuit 300.

Le comparateur 306 comprend une entrée 307 et une entrée 309. L'entrée 307 est une entrée non inverseuse (+) et l'entrée 309 est une entrée inverseuse (-).

Les comparateurs, et en particulier le comparateur 306, ont, à cause de variation de fabrication, un décalage dans les valeurs de comparaison. Plus précisément, lorsque le comparateur 308 reçoit en entrée des tensions S1 et S2, le résultat fourni sur la sortie du comparateur 306 correspond au résultat de la comparaison entre la tension S1 et la tension S2+DV, DV étant la valeur de décalage. La valeur DV est une valeur de tension, positive ou négative. Dans l'exemple de la figure 4, le comparateur 308 est associé à un circuit 311 configuré pour représenter le décalage du comparateur 306. Le comparateur 306 est donc considéré comme n'ayant pas de décalage.

Le circuit 311 n'existe de préférence pas dans la réalité et est une représentation d'une caractéristique du comparateur. En pratique, l'entrée du circuit 311 correspond à l'entrée 307 du comparateur.

L'entrée 307 est reliée, de préférence connectée, à la sortie du circuit 311 configuré pour corriger le décalage ("offset") du comparateur 306. Le circuit 311 est configuré, dans cet exemple pour ajouter une tension DV à la tension fournie sur l'entrée 307. La valeur de DV est considérée constante.

Une entrée du circuit 311 est reliée, de préférence connectée, à une sortie d'un élément de sélection 308, par exemple un multiplexeur. Ainsi, l'entrée 307 du comparateur 306 est reliée à une sortie de l'élément de sélection 308 par l'intermédiaire du circuit 311. L'entrée 309 du comparateur 306 est reliée, de préférence connectée, à une autre sortie de l'élément de sélection 308.

L'élément de sélection 308 est de préférence un élément de sélection, ou multiplexeur, comprenant trois entrées 312, 314, 316.

L'entrée 312 reçoit une rampe de tension RP. Ainsi, le circuit 17 comprend un générateur de rampe 304 configuré pour fournir la rampe de tension RP. Une sortie du générateur 304 est aussi reliée, de préférence connectée, à l'entrée 312. La tension RP est référencée à la tension de consigne GND. Le générateur 304 est alimenté par la tension Vbat et est connecté entre les rails 3 et 5, ces connexions n'étant pas représentées en figure 4 pour ne pas surcharger la figure.

Chaque rampe de tension RP est par exemple une rampe croissante, de préférence, à partir du potentiel de référence GND.

Le générateur 304 est commandé par le circuit 300, par l'intermédiaire d'un signal cmdP. Plus particulièrement, quand le signal START est dans son premier état, le circuit 300 commande la mise à l'état passant du transistor 9, et, en même temps, le démarrage, ou début, d'une rampe de tension RP via le signal cmdP. A titre d'exemple, le signal cmdP est déterminé à partir du signal de commande fourni par le circuit 300 au transistor 9, voire est identique au signal de commande fourni par le circuit 300 au transistor 9.

L'entrée 314 reçoit une rampe de tension RN. Ainsi, le circuit 17 comprend un générateur de rampe 310 configuré pour fournir la rampe de tension RN. Une sortie du générateur 310 est aussi reliée, de préférence connectée, à l'entrée 314. La tension RN est référencée à la tension de consigne GND. Le générateur 310 est alimenté par la tension Vbat et est connecté entre les rails 3 et 5, ces connexions n'étant pas représentées en figure 4 pour ne pas surcharger la figure.

Chaque rampe de tension RN est par exemple une rampe décroissante, de préférence à partir de la tension d'alimentation Vbat. Les rampes RN et RP ont des pentes de signes opposés. Ainsi, l'une, ici la pente RP, est croissante et l'autre, ici la pente RN, est décroissante. Les rampes RP et RN ont, en valeur absolue, des pentes égales.

L'entrée 316 est reliée, de préférence connectée, au nœud 171. Ainsi, l'entrée 316 reçoit la tension de consigne Vref.

L'élément de sélection 308 comprend, de plus, une entrée 318 sur laquelle l'élément de sélection reçoit un signal de commande SEL. L'entrée 318 est de préférence reliée, de préférence connectée, au circuit 300. Le circuit 300 fournit ainsi le signal de commande SEL. En fonction de l'état du signal SEL, l'élément de sélection 308 fournit l'une des trois tensions RN, RP et Vref sur chacune de ses sorties. De préférence, le signal SEL est un signal binaire et comprend deux états. Lorsque le signal SEL est dans un premier état, l'élément de sélection 308 fournit sur une sortie, de préférence la sortie reliée à l'entrée 307 du comparateur 306, la tension RP et sur l'autre sortie, de préférence la sortie reliée à l'entrée 309 du comparateur 306, la tension de consigne Vref. Lorsque le signal SEL est dans un deuxième état, l'élément de sélection 308 fournit sur une sortie, de préférence la sortie reliée à l'entrée 307 du comparateur 306, la tension de consigne Vref et sur l'autre sortie, de préférence la sortie reliée à l'entrée 309 du comparateur 306, la tension RN. Ainsi, une des rampes est fournie sur l'entrée non inverseuse durant la phase d'accumulation d'énergie et l'autre rampe est fournie sur l'entrée inverseuse durant la phase de restitution d'énergie.

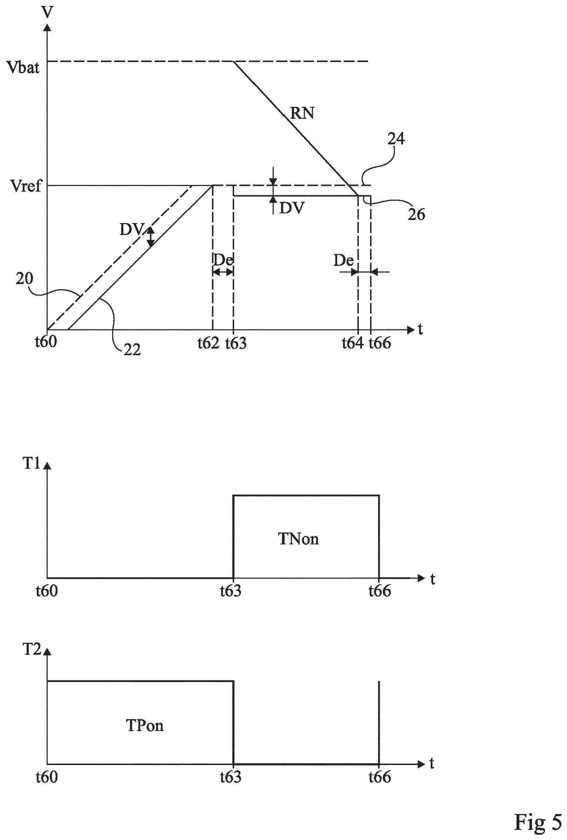

Le fonctionnement du mode de réalisation de la figure 4 sera décrit plus en détail en relation avec la figure 5.

A titre de variante, l'élément de sélection 308 peut être remplacé par deux éléments de sélection, l'un recevant en entrée la tension RP et la tension de consigne Vref et relié en sortie à l'entrée 307 par le circuit 311, et l'autre recevant en entrée la tension RN et la tension de consigne Vref et reliée en sortie à l'entrée 309.

La figure 5 est un chronogramme illustrant le fonctionnement du mode de réalisation de la figure 4. Plus précisément, la figure 5 représente les signaux d'entrée (V) du comparateur 306, l'état (T1) du transistor 13, et l'état (T2) du transistor 9. La figure 5 représente un cycle de fonctionnement du convertisseur de tension de la figure 4.

Le cycle de fonctionnement représenté commence à un instant t60. Un cycle de fonctionnement comprend une unique rampe RP et une unique rampe RN.

A l'instant t60, le circuit 300 commande le transistor 9 de telle manière que le transistor 9 soit passant. Cela est représenté en figure 5 par une valeur haute de la valeur T2. Le circuit 300 commande le transistor 13 de telle manière que le transistor 13 soit bloqué. Cela est représenté en figure 5 par une valeur basse de la valeur T1.

La phase d'accumulation de charge dans l'ensemble comprenant l'inductance 15 et la capacité 16 commence donc à l'instant t60. Autrement dit, la durée TPon commence à l'instant t60. Ainsi, le courant IL et la tension Vout, non représentés, augmentent à partir de l'instant t60.

Le circuit 300 commande le générateur 304 de manière à démarrer la rampe RP. Le signal cmdP, de préférence généré par le circuit 300 prend donc, à l'instant t60, une valeur correspondant au démarrage, par le générateur 304, d'une rampe RP.

De plus, le circuit 300 commande l'élément de sélection 308 de manière à ce que l'élément de sélection 308 fournisse en sortie la rampe RP et la tension de consigne Vref. Le signal de commande SEL, de préférence généré par le circuit 300, prend donc une valeur correspondant à la présence, sur les sorties de l'élément de sélection 308, de la rampe RP et de la tension de consigne Vref. De préférence, la rampe RP est fournie sur la sortie de l'élément de sélection 308 reliée à l'entrée 307 par le circuit 311, et la tension de consigne Vref est fournie sur la sortie de l'élément de sélection reliée au nœud 309.

Le comparateur 306 reçoit donc en entrée la tension de consigne Vref et une tension RP décalée par le circuit 311 pour représenter le décalage du comparateur 306. Ainsi, le signal de sortie COMP du comparateur 306 correspond au résultat de la comparaison de la tension de consigne Vref et de la rampe de tension RP + DV.

A l'instant t60, la rampe RP commence à croitre, de préférence à partir de zéro. La rampe RP est inférieure, à l'instant t60, à la tension de consigne Vref. Le signal de sortie COMP a donc la première valeur.

En figure 5, la rampe de tension RP, générée par le générateur 304 et fournie en entrée du circuit 311, est représentée par une courbe 20 en pointillés. Une rampe 22 en trait plein correspond à la rampe fournie en sortie du circuit 311, c'est-à-dire la rampe décalée pour représenter le décalage du comparateur 306. Dans cet exemple, le décalage DV, apporté par le circuit 311, est négatif. Le comparateur compare donc la tension représentée par la courbe 22 à la valeur Vref.

A un instant t62, postérieur à l'instant t60, la tension représentée par la courbe 22 atteint la valeur Vref. Après une durée De, correspondant au retard de propagation du comparateur 306, le signal de sortie COMP du comparateur 306 prend sa deuxième valeur. Autrement dit, à un instant t63, séparé de l'instant t62 par la durée De, la sortie du comparateur 306 indique que la rampe RP a atteint la valeur Vref.

En réponse au changement de valeur du signal COMP, le circuit 300 commande le transistor 9 de telle manière que le transistor 9 soit bloqué. Cela est représenté en figure 5 par une valeur basse de la valeur T2. Le circuit 300 commande le transistor 13 de telle manière que le transistor 13 soit passant. Cela est représenté en figure 5 par une valeur haute de la valeur T1.

La phase d'accumulation de charges dans l'ensemble comprenant l'inductance 15 et la capacité 16 est terminée à l'instant t63. La restitution de charges de l'ensemble comprenant l'inductance 15 et la capacité 16 commence. Autrement dit, la durée TPon est terminée à l'instant t63, et la durée TNon commence. Ainsi, le courant IL, non représenté, diminue à partir de l'instant t63.

De plus, le circuit 300 commande le générateur 310 de commencer à générer la rampe RN. Le signal cmdN, de préférence généré par le circuit 300 prend donc une valeur correspondant au démarrage, par le générateur 310, d'une rampe RN.

De plus, le circuit 300 commande l'élément de sélection 308 de manière à ce que l'élément de sélection 308 fournisse en sortie la rampe RN et la tension de consigne Vref. Le signal de commande SEL, de préférence généré par le circuit 300, prend donc une valeur correspondant à la présence, sur les sorties de l'élément de sélection 308, de la rampe RN et de la tension de consigne Vref. De préférence, la tension de consigne est fournie sur la sortie de l'élément de sélection 308 reliée à l'entrée 307 par le circuit 311, et la rampe RN est fournie sur la sortie de l'élément de sélection reliée au nœud 309.

Le comparateur 306 reçoit donc en entrée la rampe RN et la tension de consigne Vref modifiée par le circuit 311 pour représenter le décalage du comparateur 306. Ainsi, le signal de sortie COMP du comparateur 306 correspond au résultat de la comparaison de la tension de consigne Vref+DV et de la rampe de tension RN.

A l'instant t63, la rampe RN commence à décroitre, de préférence à partir de la valeur Vbat. La rampe RN est supérieure, à l'instant t63, à la tension de consigne Vref. Le signal de sortie COMP reprend donc la première valeur.

En figure 5, la tension de consigne Vref, fournie en entrée du circuit 311, est représentée par une courbe 24 en pointillés. Une courbe 26 en trait plein correspond à la tension de consigne Vref fournie en sortie du circuit 311, c'est-à-dire la tension Vref décalée pour représenter le décalage du comparateur 306. Dans cet exemple, le décalage DV, apporté par le circuit 311, est négatif. Le comparateur compare donc la tension représentée par la courbe 26 à la rampe RN.

A un instant t64, postérieur à l'instant t63, la courbe RN atteint la tension représentée par la courbe 26. Après une durée De, correspondant au retard de propagation du comparateur 306, le signal de sortie COMP du comparateur 306 prend sa deuxième valeur. Autrement dit, à un instant t66, séparé de l'instant t64 par la durée De, la sortie du comparateur 306 indique que la rampe RN a atteint la valeur Vref+DV.

L'instant t66 correspond à la fin du cycle de fonctionnement représenté en figure 5 et par exemple au début du cycle de fonctionnement suivant, non représenté. L'instant t66 correspond donc à la fin de la phase de restitution des charges et le début d'une phase d'accumulation de charge du cycle suivant.

Ainsi, comme à l'instant t60, le circuit 300 commande :
- le générateur 304 de commencer à fournir une nouvelle rampe RP ;
- l'élément de sélection 308 de fournir en sortie la rampe RP et la tension de consigne Vref, de préférence la rampe RP étant fournie sur la sortie de l'élément de sélection 308 reliée à l'entrée 307, et la tension de consigne Vref étant fournie sur la sortie de l'élément de sélection reliée au nœud 309 ;
- les transistors 9 et 13 pour qu'ils soient respectivement passant et bloqué.

Chacun des signaux de commande cmdN et cmdP est par exemple égal à un des signaux de commande des transistors 9 et 13. En effet, les changements d'état des différents signaux de commande sont effectués aux mêmes instants.

Idéalement, le courant Ires, c'est-à-dire le courant IL à la fin du cycle de fonctionnement est égal à zéro. Cependant, en pratique, le courant Ires est rarement égal à zéro. Le mode de réalisation décrit a l'avantage de permettre une valeur IL proche de zéro.

On aurait pu choisir d'utiliser deux comparateurs, un premier comparateur comparant la rampe RP et la tension de consigne Vref et un deuxième comparateur comparant la rampe RN et la tension de consigne Vref. Les premier et deuxième comparateurs auraient des décalages différents, causés par des disparités de fabrication. Ainsi, les premier et deuxième auraient respectivement des décalage DV1 et DV2. Cependant, l'impact du décalage et du retard de propagation serait alors plus important que dans le cas des modes de réalisation décrits précédemment. Le courant Ires serait plus éloigné de zéro.

On considère d'abord l'influence des décalages des comparateurs. On considère donc théoriquement que les comparateurs n'ont pas de retard de propagation. La valeur du courant Ires, c'est-à-dire le courant IL à la fin du cycle de fonctionnement, est donc égale à : [Math 1] $Ires = \left(DIrise∗TPon\right) + \left(DIfall∗TNon\right)$ où DIrise est la pente du courant IL durant la phase d'accumulation, DIfall est la pente du courant durant la phase de restitution.

La pente du courant IL durant la phase d'accumulation est obtenue par l'équation suivante : [Math 2] $DIrise = \frac{Vbat - Vref}{L}$ où L est l'inductance de l'élément inductif 15.

La pente du courant IL durant la phase de restitution est obtenue par l'équation suivante : [Math 3] $DIfall = \frac{- Vref}{L}$ où L est l'inductance de l'élément inductif 15.

Dans le cas où le convertisseur comprend les premier et deuxième comparateurs, la durée TPon serait définie par l'équation suivante : [Math 4] $TPon = \frac{R ∗ C}{Vbat - Vref} ∗ \left(Vref+DV1\right)$ où R et C sont respectivement une valeur de résistance et une valeur de capacité, et sont des caractéristiques des générateurs 304 et 310.

Similairement, la durée TNon serait alors définie par l'équation suivante : [Math 5] $TNon = \frac{R ∗ C}{Vbat - Vref} ∗ \left(Vbat-\left(Vref+DV2\right)\right)$

Dans les modes de réalisation décrits, les valeurs DV1 et DV2 sont remplacées respectivement par la valeur absolue de DV, notée |DV|, du comparateur 306 et la valeur -|DV|, c'est-à-dire une valeur négative ayant une valeur absolue égale à la valeur absolue de DV. En effet, le même comparateur est utilisé pour les deux phases. De plus, la rampe RP est fournie sur l'entrée non inverseuse et la rampe RN est fournie sur l'entrée inverseuse.

On considère par exemple que les valeurs DV1 et DV2 sont suffisamment proches pour que l'on puisse faire l'approximation qu'elles sont égales. Ainsi, le courant Ires serait, dans le cas des premier et deuxième comparateurs, égal à : [Math 6] $Ires = \frac{R ∗ C}{L} DV \left(1+\frac{Vref}{Vbat - Vref}\right)$

De plus, le courant Ires, dans le mode de réalisation décrit, est égal à : [Math 7] $Ires = \frac{R ∗ C}{L} DV \left(1-\frac{Vref}{Vbat - Vref}\right)$

Ainsi, la valeur Ires est toujours plus proche de zéro dans le mode de réalisation décrit que dans le cas des premier et deuxième comparateurs.

On considère d'abord l'influence des retards de propagation. On considère donc théoriquement que les comparateurs n'ont pas de décalage.

Dans le cas des premier et deuxième comparateurs, le premier comparateur a un retard de propagation De1, et le deuxième comparateur a un retard de propagation De2. La valeur du courant Ires, c'est-à-dire le courant IL à la fin du cycle est donc égale à : [Math 8] $Ires = \left(DIrise∗\left(TPon+De1\right)\right) + \left(DIfall∗\left(TNon+De2\right)\right)$ où DIrise, DIfall, TPon et TNon ont les mêmes valeurs que précédemment, avec DV1 = DV2 = DV = 0.

Dans les modes de réalisation décrits précédemment, la valeur du courant Ires, c'est-à-dire le courant IL à la fin du cycle est donc égale à : [Math 9] $Ires = \left(DIrise∗\left(TPon+De\right)\right) + \left(DIfall∗\left(TNon+De\right)\right)$ où DIrise, DIfall, TPon et TNon ont les mêmes valeurs que précédemment, avec DV1 = DV2 = DV = 0.

Ainsi, le courant Ires serait, dans le cas des premier et deuxième comparateurs, égal à : [Math 10] $Ires = \frac{1}{L} \left(\left(Vbat-Vref\right)∗De1-Vref∗De2\right)$

Le courant Ires, dans le cas des modes de réalisation décrits, est égal à : [Math 11] $Ires = \frac{De}{L} \left(Vbat-2Vref\right)$

Si De1 est différent de De2, ce qui est presque toujours de cas, le courant Ires dans le cas des modes de réalisation est plus proche de zéro que dans le cas des premier et deuxième comparateurs.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Convertisseur (1) abaisseur de tension comprenant :
- un premier transistor (9) connecté entre un premier noeud (11) du convertisseur et un deuxième noeud (3) configuré pour recevoir une tension d'alimentation (Vbat) ;
- un deuxième transistor (13) connecté entre le premier noeud et un troisième noeud (5) configuré pour recevoir un potentiel de référence (GND) ;
- un élément inductif (15) entre le premier nœud (11) et un quatrième nœud (2) ;
- un élément capacitif (16) entre le quatrième nœud (2) et le troisième nœud (5) ; et
- un circuit de commande (17) configuré pour commander les premier et deuxième transistors dans un mode de fonctionnement comprenant une pluralité de cycles de fonctionnement, chaque cycle de fonctionnement comprenant une première phase et une deuxième phase, le circuit de commande (17) étant configuré pour générer durant chaque première phase, une première rampe de tension (RP) et, durant chaque deuxième phase, une deuxième rampe de tension (RN), les première (RP) et deuxième (RN) rampes de tension ayant des pentes de signes opposés et ayant une même pente, en valeur absolue, la première rampe (RP) de tension étant configurée pour commencer à croitre à partir du potentiel de référence (GND) et la deuxième rampe (RN) de tension étant configurée pour commencer à décroitre à partir de la tension d'alimentation (Vbat),
le circuit de commande (17) comprenant :
- un premier circuit (300) configuré pour commander les premier et deuxième transistors ;
- un premier comparateur (302) d'une tension au deuxième nœud avec une tension de consigne (Vref) et conditionnant le démarrage d'un cycle de fonctionnement du convertisseur au fait que la tension du deuxième nœud soit inférieur à la tension de consigne ; et
- un deuxième comparateur (306) comprenant des première (307) et deuxième (309) entrées,
dans lequel :
la première entrée est configurée pour recevoir, durant chaque première phase, la première rampe de tension (RP) et, durant chaque deuxième phase, la tension de consigne (Vref),
la deuxième entrée est configurée pour recevoir, durant chaque première phase, la tension de consigne (Vref) et, durant chaque deuxième phase, la deuxième rampe de tension (RN),
le premier circuit (300) est configuré pour maintenir les premier (9) et deuxième (13) transistors respectivement passant et bloqué durant la première phase et pour maintenir les premier et deuxième transistors respectivement bloqué et passant dans la deuxième phase,
le convertisseur est configuré pour passer de la première phase à la deuxième phase lorsque une valeur de sortie du comparateur indique que la première rampe de tension atteint la valeur de consigne (Vref), et pour passer de la deuxième phase à la première phase lorsque une valeur de sortie du comparateur indique que la deuxième rampe de tension atteint la valeur de consigne (Vref).

2. Procédé de commande d'un convertisseur (1) abaisseur de tension comprenant :
- un premier transistor (9) connecté entre un premier noeud (11) du convertisseur et un deuxième noeud (3), le premier transistor recevant une tension d'alimentation (Vbat) ;
- un deuxième transistor (13) connecté entre le premier noeud et un troisième noeud (5), le deuxième transistor recevant un potentiel de référence (GND) ;
- un élément inductif (15) entre le premier nœud (11) et un quatrième nœud (2) ;
- un élément capacitif (16) entre le quatrième nœud (2) et le troisième nœud (5) ; et
- un circuit de commande (17) commandant les premier et deuxième transistors dans un mode de fonctionnement comprenant une pluralité de cycles de fonctionnement, chaque cycle de fonctionnement comprenant une première phase et une deuxième phase, le circuit de commande (17) générant durant chaque première phase, une première rampe de tension (RP) et, durant chaque deuxième phase, une deuxième rampe de tension (RN), les première (RP) et deuxième (RN) rampes de tension ayant des pentes de signes opposés et ayant une même pente, en valeur absolue, la première rampe (RP) de tension commençant à croitre à partir du potentiel de référence (GND) et la deuxième rampe (RN) de tension commençant à décroitre à partir de la tension d'alimentation (Vbat),
le circuit de commande (17) comprenant :
- un premier circuit (300) commandant les premier et deuxième transistors ;
- un premier comparateur (302) d'une tension au deuxième nœud avec une tension de consigne (Vref) et conditionnant le démarrage d'un cycle de fonctionnement du convertisseur au fait que la tension du deuxième nœud soit inférieur à la tension de consigne ; et
un deuxième comparateur (306) comprenant des première (307) et deuxième (309) entrées,
le procédé comprenant :
la première phase de chaque cycle de fonctionnement durant laquelle la première entrée reçoit une première rampe de tension (RP) et la deuxième entrée reçoit une tension de consigne (Vref), et
la deuxième phase de chaque cycle de fonctionnement durant laquelle la première entrée reçoit la tension de consigne (Vref) et la deuxième entrée reçoit une deuxième rampe de tension (RN), et
dans lequel :
le premier circuit (300) maintient les premier (9) et deuxième (13) transistors respectivement passant et bloqué durant la première phase et pour maintenir les premier et deuxième transistors respectivement bloqué et passant dans la deuxième phase,
le convertisseur passe de la première phase à la deuxième phase lorsque une valeur de sortie du comparateur indique que la première rampe de tension atteint la valeur de consigne (Vref),
et passe de la deuxième phase à la première phase lorsque une valeur de sortie du comparateur indique que la deuxième rampe de tension atteint la valeur de consigne (Vref).

3. Convertisseur selon la revendication 1 ou procédé selon la revendication 2, dans lequel la première entrée est une entrée non inverseuse et la deuxième entrée est une entrée inverseuse.

4. Convertisseur selon la revendication 1 ou 3 ou procédé selon la revendication 2 ou 3, dans lequel les première (307) et deuxième (309) entrées sont reliées respectivement à des première et deuxième sorties d'un élément de sélection (308) recevant en entrée la tension de consigne (Vref), et les première (RP) et deuxième (RN) rampes de tension.

5. Convertisseur selon l'une quelconque des revendications 1, 3 à 4 ou procédé selon l'une quelconque des revendications 2 à 4, dans lequel une sortie du deuxième comparateur est reliée au premier circuit (300).

6. Convertisseur ou procédé selon la revendication 5, dans lequel le deuxième comparateur est configuré pour fournir en sortie un signal de sortie, le signal prenant une première valeur lorsque la deuxième rampe de tension atteint la valeur de la tension de consigne, et prenant une deuxième valeur lorsque la première rampe de tension atteint la valeur de la tension de consigne.

## Patentansprüche

1. Ein Abwärts-Spannungswandler (1), der Folgendes aufweist:
- einen ersten Transistor (9), der zwischen einem ersten Knoten (11) des Wandlers und einem zweiten Knoten (3) angeschlossen ist, der eingerichtet ist, eine Versorgungsspannung (Vbat) zu empfangen;
- einen zweiten Transistor (13), der zwischen dem ersten Knoten und einem dritten Knoten (5) angeschlossen ist, der eingerichtet ist, ein Referenzpotential (GND) zu empfangen;
- ein induktives Element (15) zwischen dem ersten Knoten (11) und einem vierten Knoten (2);
- ein kapazitives Element (16) zwischen dem vierten Knoten (2) und dem dritten Knoten (5); und
- eine Steuerschaltung (17), die eingerichtet ist, den ersten und den zweiten Transistor in einer Betriebsart zu steuern, die eine Vielzahl von Betriebszyklen aufweist, wobei jeder Betriebszyklus eine erste Phase und eine zweite Phase aufweist, wobei die Steuerschaltung (17) eingerichtet ist, während jeder ersten Phase eine erste Spannungsrampe (RP) und während jeder zweiten Phase eine zweite Spannungsrampe (RN) zu erzeugen, wobei die erste (RP) und die zweite (RN) Spannungsrampe Steigungen mit entgegengesetzten Vorzeichen und betragsmäßig derselben Steigung aufweisen, wobei die erste Spannungsrampe (RP) eingerichtet ist, ausgehend von dem Referenzpotential (GND) anzusteigen, und die zweite Spannungsrampe (RN) eingerichtet ist, ausgehend von der Versorgungsspannung (Vbat) abzufallen,
wobei die Steuerschaltung (17) Folgendes aufweist:
- eine erste Schaltung (300), die eingerichtet ist, den ersten und den zweiten Transistor zu steuern;
- einen ersten Komparator (302), der eine Spannung an dem zweiten Knoten mit einer Sollspannung (Vref) vergleicht und den Beginn eines Betriebszyklus des Wandlers davon abhängig macht, dass die Spannung an dem zweiten Knoten niedriger als die Sollspannung ist; und
- einen zweiten Komparator (306), der einen ersten (307) und einen zweiten (309) Eingang aufweist,
wobei:
der erste Eingang eingerichtet ist, während jeder ersten Phase die erste Spannungsrampe (RP) und während jeder zweiten Phase die Sollspannung (Vref) zu empfangen,
der zweite Eingang eingerichtet ist, während jeder ersten Phase die Sollspannung (Vref) und während jeder zweiten Phase die zweite Spannungsrampe (RN) zu empfangen,
die erste Schaltung (300) eingerichtet ist, den ersten (9) und den zweiten (13) Transistor während der ersten Phase jeweils eingeschaltet und ausgeschaltet zu halten und den ersten und den zweiten Transistor während der zweiten Phase jeweils ausgeschaltet und eingeschaltet zu halten,
der Wandler eingerichtet ist, von der ersten Phase zu der zweiten Phase umzuschalten, wenn ein Ausgangswert des Komparators angibt, dass die erste Spannungsrampe den Wert der Sollspannung (Vref) erreicht, und von der zweiten Phase zu der ersten Phase umzuschalten, wenn ein Ausgangswert des Komparators angibt, dass die zweite Spannungsrampe den Wert der Sollspannung (Vref) erreicht.

2. Ein Verfahren zum Steuern eines Abwärts-Spannungswandlers (1), der Folgendes aufweist:
- einen ersten Transistor (9), der zwischen einem ersten Knoten (11) des Wandlers und einem zweiten Knoten (3) angeschlossen ist, wobei der erste Transistor eine Versorgungsspannung (Vbat) empfängt;
- einen zweiten Transistor (13), der zwischen dem ersten Knoten und einem dritten Knoten (5) angeschlossen ist, wobei der zweite Transistor ein Referenzpotential (GND) empfängt;
- ein induktives Element (15) zwischen dem ersten Knoten (11) und einem vierten Knoten (2);
- ein kapazitives Element (16) zwischen dem vierten Knoten (2) und dem dritten Knoten (5); und
- eine Steuerschaltung (17), die den ersten und den zweiten Transistor in einer Betriebsart steuert, die eine Vielzahl von Betriebszyklen aufweist, wobei jeder Betriebszyklus eine erste Phase und eine zweite Phase aufweist, wobei die Steuerschaltung (17) während jeder ersten Phase eine erste Spannungsrampe (RP) und während jeder zweiten Phase eine zweite Spannungsrampe (RN) erzeugt, wobei die erste (RP) und die zweite (RN) Spannungsrampe Steigungen mit entgegengesetzten Vorzeichen und betragsmäßig derselben Steigung aufweisen, wobei die erste Spannungsrampe (RP) ausgehend von dem Referenzpotential (GND) anzusteigen beginnt und die zweite Spannungsrampe (RN) ausgehend von der Versorgungsspannung (Vbat) abzufallen beginnt,
wobei die Steuerschaltung (17) Folgendes aufweist:
- eine erste Schaltung (300), die den ersten und den zweiten Transistor steuert;
- einen ersten Komparator (302), der eine Spannung an dem zweiten Knoten mit einer Sollspannung (Vref) vergleicht und den Beginn eines Betriebszyklus des Wandlers davon abhängig macht, dass die Spannung an dem zweiten Knoten niedriger als die Sollspannung ist; und
- einen zweiten Komparator (306), der einen ersten (307) und einen zweiten (309) Eingang aufweist,
wobei das Verfahren Folgendes aufweist:
die erste Phase jedes Betriebszyklus, während der der erste Eingang eine erste Spannungsrampe (RP) empfängt und der zweite Eingang die Sollspannung (Vref) empfängt, und
die zweite Phase jedes Betriebszyklus, während der der erste Eingang die Sollspannung (Vref) empfängt und der zweite Eingang eine zweite Spannungsrampe (RN) empfängt,
wobei:
die erste Schaltung (300) den ersten (9) und den zweiten (13) Transistor während der ersten Phase jeweils eingeschaltet und ausgeschaltet hält und den ersten und den zweiten Transistor während der zweiten Phase jeweils ausgeschaltet und eingeschaltet hält,
der Wandler von der ersten Phase zu der zweiten Phase umschaltet, wenn ein Ausgangswert des Komparators angibt, dass die erste Spannungsrampe den Wert der Sollspannung (Vref) erreicht, und von der zweiten Phase zu der ersten Phase umschaltet, wenn ein Ausgangswert des Komparators angibt, dass die zweite Spannungsrampe den Wert der Sollspannung (Vref) erreicht.

3. Der Wandler nach Anspruch 1 oder das Verfahren nach Anspruch 2, wobei der erste Eingang ein nichtinvertierender Eingang und der zweite Eingang ein invertierender Eingang ist.

4. Der Wandler nach Anspruch 1 oder 3 oder das Verfahren nach Anspruch 2 oder 3, wobei der erste (307) und der zweite (309) Eingang jeweils mit einem ersten und einem zweiten Ausgang eines Auswahl-elements (308) gekoppelt sind, das die Sollspannung (Vref) sowie die erste (RP) und die zweite (RN) Spannungsrampe als Eingänge empfängt.

5. Der Wandler nach einem der Ansprüche 1, 3 bis 4 oder das Verfahren nach einem der Ansprüche 2 bis 4, wobei ein Ausgang des zweiten Komparators mit der ersten Schaltung (300) gekoppelt ist.

6. Der Wandler oder das Verfahren nach Anspruch 5, wobei der zweite Komparator eingerichtet ist, ein Ausgangssignal auszugeben, wobei das Signal einen ersten Wert annimmt, wenn die zweite Spannungsrampe den Wert der Sollspannung erreicht, und einen zweiten Wert annimmt, wenn die erste Spannungsrampe den Wert der Sollspannung erreicht.

## Claims

1. A step-down voltage converter (1) comprising:
- a first transistor (9) connected between a first node (11) of the converter and a second node (3) configured to receive a power supply voltage (Vbat);
- a second transistor (13) connected between the first node and a third node (5) configured to receive a reference potential (GND);
- an inductive element (15) between the first node (11) and a fourth node (2);
- a capacitive element (16) between the fourth node (2) and the third node (5); and
- a control circuit (17) configured to control the first and second transistors in an operating mode comprising a plurality of operating cycles, each operating cycle comprising a first phase and a second phase, the control circuit (17) being configured to generate, during each first phase, a first voltage ramp (RP) and, during each second phase, a second voltage ramp (RN), the first (RP) and second (RN) voltage ramps having slopes of opposite signs and having a same slope, in absolute value, the first voltage ramp (RP) being configured to start increasing from the reference potential (GND) and the second voltage ramp (RN) being configured to start decreasing from the power supply voltage (Vbat),
the control circuit (17) comprising:
- a first circuit (300) configured to control the first and second transistors;
- a first comparator (302) comparing a voltage at the second node with a set point voltage (Vref) and conditioning the start of an operating cycle of the converter on the voltage at the second node being lower than the set point voltage; and
- a second comparator (306) comprising first (307) and second (309) inputs,
wherein:
the first input is configured to receive, during each first phase, the first voltage ramp (RP) and, during each second phase, the set point voltage (Vref),
the second input is configured to receive, during each first phase, the set point voltage (Vref) and, during each second phase, the second voltage ramp (RN),
the first circuit (300) is configured to maintain the first (9) and second (13) transistors respectively on and off during the first phase and to maintain the first and second transistors respectively off and on in the second phase,
the converter is configured to switch from the first phase to the second phase when an output value of the comparator indicates that the first voltage ramp reaches the value of the set point voltage (Vref), and to switch from the second phase to the first phase when an output value of the comparator indicates that the second voltage ramp reaches the value of the set point voltage (Vref).

2. A method of controlling a step-down voltage converter (1) comprising:
a first transistor (9) connected between a first node (11) of the converter and a second node (3), the first transistor receiving a power supply voltage (Vbat);
a second transistor (13) connected between the first node and a third node (5), the second transistor receiving a reference potential (GND);
an inductive element (15) between the first node (11) and a fourth node (2);
a capacitive element (16) between the fourth node (2) and the third node (5); and
a control circuit (17) controlling the first and second transistors in an operating mode comprising a plurality of operating cycles, each operating cycle comprising a first phase and a second phase, the control circuit (17) generating, during each first phase, a first voltage ramp (RP) and, during each second phase, a second voltage ramp (RN), the first (RP) and second (RN) voltage ramps having slopes of opposite signs and having a same slope, in absolute value, the first voltage ramp (RP) starting to increase from the reference potential (GND) and the second voltage ramp (RN) starting to decrease from the power supply voltage (Vbat),
the control circuit (17) comprising:
a first circuit (300) controlling the first and second transistors;
a first comparator (302) comparing a voltage at the second node with a set point voltage (Vref) and
conditioning the start of an operating cycle of the converter on the voltage at the second node being lower than the set point voltage; and
a second comparator (306) comprising first (307) and second (309) inputs,
the method comprising:
the first phase of each operating cycle, during which the first input receives a first voltage ramp (RP) and the second input receives the set point voltage (Vref), and
the second phase of each operating cycle, during which the first input receives the set point voltage (Vref) and the second input receives a second voltage ramp (RN),
wherein:
the first circuit (300) maintains the first (9) and second (13) transistors respectively on and off during the first phase and maintains the first and second transistors respectively off and on in the second phase,
the converter switches from the first phase to the second phase when an output value of the comparator indicates that the first voltage ramp reaches the value of the set point voltage (Vref), and switches from the second phase to the first phase when an output value of the comparator indicates that the second voltage ramp reaches the value of the set point voltage (Vref).

3. The converter according to claim 1 or the method according to claim 2, wherein the first input is a noninverting input and the second input is an inverting input.

4. The converter according to claim 1 or 3 or the method according to claim 2 or 3, wherein the first (307) and second (309) inputs are respectively coupled to first and second outputs of a selection element (308) receiving as inputs the set point voltage (Vref) and the first (RP) and second (RN) voltage ramps.

5. The converter according to any of claims 1, 3 to 4 or the method according to any of claims 2 to 4, wherein an output of the second comparator is coupled to the first circuit (300).

6. The converter or the method according to claim 5, wherein the second comparator is configured to output an output signal, the signal taking a first value when the second voltage ramp reaches the value of the set point voltage, and taking a second value when the first voltage ramp reaches the value of the set point voltage.
